# EUROPEAN PATENT SPECIFICATION

(11) **EP 1 114 368 B1**
(45) Date of publication and mention of the grant of the patent: **11.01.2006**
(21) Application number: 99970184.0
(22) Date of filing: 17.09.1999
(51) Int. Cl.: G06F 9/44

(54) **A SOFTWARE SYSTEM DEVELOPMENT FRAMEWORK**
EINE SOFTWAREENTWICKLUNGSSTRUKTUR
CADRE DE DEVELOPPEMENT DE SYSTEME LOGICIEL

(30) Priority: 17.09.1998 US 154613; 17.09.1998 US 156026; 17.09.1998 US 156027; 17.09.1998 US 156028; 17.09.1998 US 156029
(43) Date of publication of application: 11.07.2001
(73) Proprietor: UNISYS CORPORATION, Blue Bell, PA 19424-0001 (US)
(72) Inventor: FONTANA, James, Albert, Mission Viejo, CA 92692 (US); TADMAN, Mark, Jeffrey, Mission Viejo, CA 92691 (US); PITCHFORD, Anthony, Reginald, Mission Viejo, CA 92692 (US); SKINNER, Steven, George, Trabuco Canyon, CA 92679 (US); STEFANIAK, Joseph, Peter, San Clemente, CA 92673 (US); SMITH, Christopher, Eyre, Coto de Caza, CA 92679 (US); IVENGAR, Sridhar, Srinivasa, Irvine, CA 92614 (US); SMITH, Norman, Roy, Lake Forest, CA 92630 (US); TOLBERT, Douglas, Marshall, Newport Beach, CA 92660 (US)
(74) Representative: Modiano, Micaela Nadia
(86) International application number: PCT/US1999/021586
(87) International publication number: WO 2000/020968

(56) References cited:
- EP-A- 0 495 310
- US-A- 5 587 935
- BIGGERSTAFF T J: "DESIGN RECOVERY FOR MAINTENANCE AND REUSE" COMPUTER,US,IEEE COMPUTER SOCIETY, LONG BEACH., CA, US, vol. 22, no. 7, 1 July 1989 (1989-07-01), pages 36-49, XP000039033 ISSN: 0018-9162

## Description

### FIELD OF THE INVENTION:

The present invention generally relates to a method and system for integrating various software tools for a development framework, and more particularly to a method and system for third party tool integration for a development environment, which method and system supports the entire software life cycle including business process modeling, object modeling, component management, application development and deployment, and legacy integration.

### BACKGROUND OF THE INVENTION:

Windows NT is increasingly penetrating legacy environments, thereby creating a need to integrate existing applications with new applications based upon Windows NT. Accordingly, the complexity of developing and managing applications in heterogeneous environments is greatly increased. Moreover, software system development is moving away from an application-centered view to one that is centered on business processes. The starting point is a set of business process models, and the applications are then developed from the models. The result is a need for a comprehensive set of tools to abstract existing legacy systems into business models, and then to generate applications from those models.

Business process models define business processes; and, business processes describe activities that need to be performed within an organization. Examples of such activities may include processing purchase orders, payroll processing, or processing insurance claims. Actual software applications may be derived from business processes. These software applications, in conjunction with other software systems and a team of humans, may accomplish a defined business process.

Creation of business applications results in the need for a comprehensive environment that will support the entire business application development process. The process may start with the building of business models and progress to representing the business models as a collection of object models. Object models are a means for describing interactions between functions that are amenable to being automated in a computer system, and which collectively represent the functionality necessary to implement a business model.

The next step may include creating source code for the functions defined in the object model (business logic); that is, the creation of methods for the business processes that represent details of how the business runs. For example, if the business process is the handling of purchase orders, one function in the business process may be approval. The approval process may be represented as one part of an object model. Further, one detail about how this function is accomplished may be that purchase orders over $1,000 must be approved by a manager. Computer source code may be developed to implement the steps necessary to route purchase orders over $1,000 to a manager for approval. The development process may then proceed to building and wrapping components (reusable pieces of code), building applications from the components, and installing the new applications and components into the appropriate environments.

The development process results in a further need to discover legacy systems; that is, existing applications, components, business processes, or other legacy systems that must be discovered and integrated into new business models, which may in turn generate new business applications. The incorporation of existing legacy items into new applications will help preserve investments made in creating the legacy systems. A tool for performing the discovery of legacy systems is an example of one of the software tools capable of being integrated with other tools by the method and system of the present invention.

Current technology does not adequately address the needs for integrating various tools for use in a single environment that would support the process from beginning to end. Another shortcoming of existing technology is the inability to discover and reconstruct existing legacy items and incorporate them into new applications. Although there are tools that allow transformation of some legacy items into certain kinds of object models, these tools do not utilize the models to generate business applications. Furthermore, these tools are limited in their ability to abstract an object model from an existing software implementation, and are also not generalized, meaning that they are able to transform only certain types of legacy items into object models.

A further shortcoming of the current technology is that tools are usually inextricably linked to specific middleware, requiring the pairing of a specific tool with a specific middleware, when creating business applications. As an example of this shortcoming, if one tool is used to develop the business process model, one might be bound in the selection of the same tool to create the application source code for the model. The lack of tool independence is mainly due to the inability

BIGGERSTAFF T J "DESIGN RECOVERY FOR MAINTENANCE AND REUSE" COMPUTER, US, IEEE COMPUTER SOCIETY, LONG BEACH., CA, US, vol. 22, no. 7, 1 July 1989 (1989-07-01), pages 36-49, describes a method and system that is concerned with software tool integration. To this end the author of the above article proposes using a recovery knowledge base (domain model).

US-A-5 587 935 describes an integrated software development system for creating a process model and writing software based on the process model. The known system includes a group decision support subsystem for creating and ordering a process protocol according to a model, an application development subsystem for writing software based on the output of the group decision support subsystem and a bridge subsystem therebetween.

### SUMMARY OF THE INVENTION:

A system and method is provided in a computer system for integrating software development tools and applications into the computer system in order to build, deploy and maintain enterprise business process applications in a heterogeneous development framework. Integration of the applications and software development tools are achieved through integration of the key elements of the computer system which are business models, domain models and components. In the process of integration the origin of a first newly developed/modified/existing business model is traced to a first newly developed/modified/existing domain model and these models are linked together. Next, the constituent components of a second newly developed/modified/existing domain model are traced to a newly developed/modified/existing set of components created and linked together. The system also involves recovery of constituent components from a newly developed/modified/existing system in a first heterogeneous environment and those constituent components are reconstructed into usable components inside a third newly developed/modified/existing domain model and are linked together. The process also involves recovery of a fourth newly developed/modified/existing domain model from a second heterogeneous environment and linking it to a second newly developed/modified/existing business model.

It is an object of this invention to provide a method and system that lets users develop business process applications, where such method and system support legacy integration; and, support the entire software life cycle of (1) business process modeling; (2) object modeling; (3) component management; (4) application development; and, (5) application deployment.

Another object of the present invention is to provide a method and system that allows a user to develop business process applications with the use of heterogeneous tools.

Still another object of the present invention is to provide a method and system that integrates a variety of software tools, such as business modeling tools, component-modeling tools, component behavior tools and component wrapping tools.

Yet another object of the present invention is to provide a method and system that overcomes the prior art limitations of integrating only those tools from the same vendor, or the lack of functional scope for integrating newly developed tools, or the lack of tool interoperability.

An object of the present invention is to take existing software tools from a variety of vendors, and targeting a variety of middleware, and to integrate them into a coherent development framework in lieu of developing new tools.

A feature of the method and system of the present invention is the ability to trace the influence of an action of one tool on other tools, thereby making them interoperable and integrated.

Another feature of the method and system of the present invention is the ability to update other tools when an action is taken by a first tool.

Yet another feature of the method and system of the present invention is the ability to discover and reconstruct legacy programs.

An advantage of the method and system of the present invention is the ability to integrate the best of market software tools thereby providing a cooperative set of services under a unified framework. Hence, the user may focus on the development process and not be troubled with the integration or bridging of a variety of tools.

Still other objects, features and advantages of the present invention will become readily apparent to those skilled in the art from the following detailed description, wherein is shown and described only the preferred embodiment of the invention, simply by way of illustration of the best mode contemplated for carrying out the invention. As will be realized, the invention is capable of other and different embodiments, and its several details are capable of modifications in various obvious respects; all without departing from the invention. Accordingly, the drawings and description are to be regarded as illustrative in nature, and not as restrictive, and what is intended to be protected by Letters Patent is set forth in the appended claims. The present invention will become apparent when taken in conjunction with the following description and attached drawings, wherein like characters indicate like parts; and, which the drawings form a part of this application.

### BRIEF DESCRIPTION OF THE DRAWINGS:

FIG. 1 is a block diagram of a prior art development system and method.
FIG. 2 is a block diagram of the system of the present invention.
FIGS. 3A and 3B are conceptual diagrams of the evolution and development process implemented by the method and system of the present invention.
FIG. 4 is a process flow diagram of the method of the present invention.
FIG. 5 is a block diagram showing the interrelationships of the modules making up the business modeling development framework of the present invention.
FIG. 6 is a block diagram of the asset modeling development framework of the present invention.
FIG. 7 is a block diagram of the execution-time architecture of the present invention.
FIGS. 8A through 8F illustrate top-level screens for the user during operation of the process.

### DETAILED DESCRIPTION OF ONE EMBODIMENT:

Before proceeding with a description of the system and method of the present invention, a summary of Terminology used herein is provided, which may be helpful in understanding the disclosed embodiment.

An *object* is an abstract representation of a real-world concept or thing. For example, an object can be used to represent a customer account in a banking application. An object has *features,* which can be either an *operation* or a *property*. An operation defines an action that an object can perform, or an action that can be performed on the object. For example, "make withdrawal" could be defined as an operation on a customer account object. Properties indicate the state of an object. Every property of an object has a value, and it is the property values that define the state of the object. A property can be either an *attribute* or a *reference*. An attribute defines a value that is stored within the object. For example, "current account balance" could be an attribute of the customer account object. The numeric value for the customer's account balance would be stored in the customer account object. A reference is a link or pointer to another object, and implies a relationship to that other object. A reference is typically used when it is desired not to duplicate data. For example, the customer account object could store the customer's name and address as attributes. However, if the customer opened multiple accounts, the customer's name and address would appear in multiple account objects. Therefore, it is desirable to define a separate customer object and place the name and address as attributes of the customer object. The customer account object would then contain a reference to the customer object.

A normal object program stores objects in a computer system's memory. When the program terminates, the memory used by those objects is freed and reused by other programs, making the objects that the program stored *transient*. An object database stores objects in a nonvolatile memory, such as a computer disk. Since the information on a computer disk remains in existence, even when the computer is turned off, an object database provides the ability to *persistently* store objects. An object program that uses an object database thus has the option of storing objects transiently or persistently.

The term *protocol* as used herein refers to a set of formal rules describing how to transmit data, especially across a network. Low-level protocols define the electrical and physical standards to be observed, bit-and byte-ordering and the transmission and error detection as well as correction of the bit stream. High-level protocols deal with message formatting, including the syntax of messages, the terminal to computer dialogue, character sets, sequencing of messages, etc.

The term *schema* as used herein refers to the logical description of data in a database, including definitions and relationships of data.

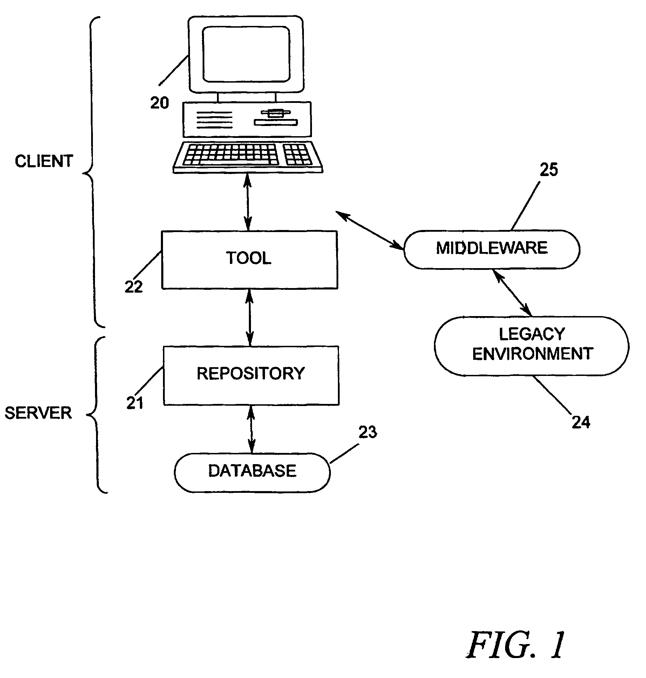

Referring now to the drawings and FIG. 1 in particular, a block diagram of a system is shown of the prior art technique for execution of legacy programs in a Windows NT environment. Windows NT is a proprietary operating system of Microsoft Corporation of Redmond, WA. A user interface 20 is coupled to a repository 21 by means of a software tool 22. The tool 22 may have access to a legacy environment 24 by means of middleware 25, and the repository 21 may have access to a database 23.

The developer creating the tool 22 examines the description of the legacy environment 24, which is stored in the repository 21. Using the information obtained, the developer encodes into tool 22 a set of calls to middleware 25, which facilitate the required communication with the legacy environment 24. At run time, the tool 22 may contact the legacy environment 24 via the middleware 25 without reference to the information stored in the repository 21.

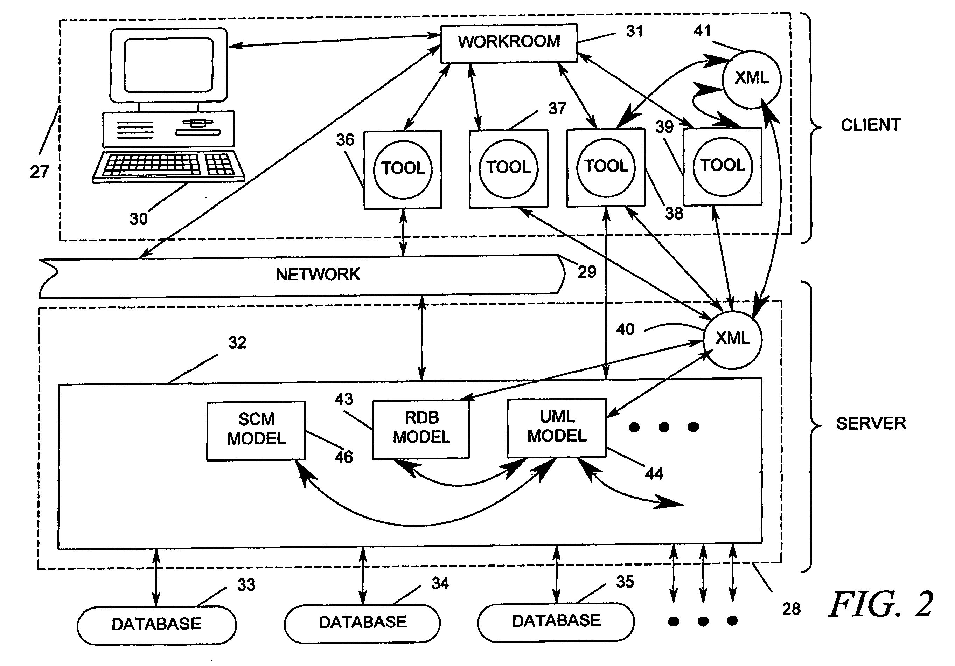

Referring now to FIG. 2, the system of the present invention is illustrated in block diagram form. For ease of understanding, the system is illustrated in two parts. First, there is a client 27 as bounded by a dashed line and a server 28, also as bounded by a dashed line. The client 27 and server 28 communicate with one another over a network 29. The network 29 may comprise any conventional network (e.g., TCP/IP), or the Internet.

A user interface 30, which may be the same or different from the user interface 20 depicted in FIG. 1, is coupled to a workroom 31 and both are shown as part of the client. The workroom 31 is a front end component of the method and system of the present invention and is coupled to the network 29, which is coupled to a repository 32.

In the disclosed embodiment, the repository 32 is a specialized, extensible object-oriented database application that adds value to a database system, which allows customization of a particular domain (such as application development) and it may be the same as the repository 21 depicted in FIG. 1. The repository 32 is coupled to databases 33, 34, 35, etc. for accessing modeling data stored therein.

The repository 32 further includes methods for cataloging, browsing, modeling, and managing components that make up an application. Methods to support these services are disclosed in several patents and patent applications assigned to the assignee of this patent application, including U.S. Patent 5,671,398 for METHOD FOR COLLAPSING A VERSION TREE WHICH DEPICTS A HISTORY OF SYSTEM DATA AND PROCESSES FOR AN ENTERPRISE; U.S. Patent 5,644,764 for METHOD FOR SUPPORTING OBJECT MODELING IN A REPOSITORY; U.S. Patent 5,581,755 for METHOD FOR MAINTAINING A HISTORY OF SYSTEM DATA AND PROCESSES FOR AN ENTERPRISE; U.S. Patent 5,557,793 for IN AN OBJECT ORIENTED REPOSITORY, A METHOD FOR TREATING A GROUP OF OBJECTS AS A SINGLE OBJECT DURING EXECUTION OF AN OPERATION; U.S. Patent 5,889,992, for A METHOD FOR MAPPING TYPES IN A MODEL IN A OBJECT-ORIENTED REPOSITORY TO LANGUAGE CONSTRUCTS FOR A C BINDING FOR THE REPOSITORY; U.S. Patent 5,721,925, for METHOD FOR GENERICALLY INVOKING OPERATIONS IN AN OBJECT ORIENTED REPOSITORY; U.S. Patent 5,848,273, for A METHOD FOR GENERATING OLE AUTOMATION AND IDL INTERFACES FROM METADATA INFORMATION; U.S. Patent 5,765,039 for A METHOD FOR PROVIDING OBJECT DATABASE INDEPENDENCE IN A PROGRAM WRITTEN USING THE C++ PROGRAMING LANGUAGE; U. S. Patent 5,758,348, for A METHOD FOR GENERICALLY MANIPULATING PROPERTIES OF OBJECTS IN AN OBJECT ORIENTED REPOSITORY; U.S. Patent 5,701,472, for A METHOD FOR LOCATING A VERSIONED OBJECT WITHIN A VERSION TREE DEPICTING A HISTORY OF SYSTEM DATA AND PROCESSES FOR AN ENTERPRISE; and, pending application U.S. Serial No. 08/934,833, filed on September 22, 1997, for TOOL-INDEPENDENT APPLICATION DEVELOPMENT; each of which are hereby incorporated by reference as if set forth in full herein.

Tools 36 through 39 (within the client 27) are coupled to the workroom 31 and are disposed for performing a variety of tasks. For example, tool 36 may comprise a Visual Basic tool. Tool 36 is shown as being directly coupled to the network 29, which is linked to the repository 32. Tool 37 may comprise for example, Select Component Manager, which is available from Select Software Tools, Ltd. of Gloucestershire, U.K. Tool 38 may comprise for example, Select Enterprise, also available from Select Software Tools, Ltd. Tool 39 may comprise for example, Rational Rose, which is available from Rational Software Corporation of Santa Clara, CA.

Tools 37, 38 and 39 are linked to the repository 32 by means of an XML component 41 ("Extended Markup Language"), which is disposed within the Client 27. XML is typically used to enable access, via the internet protocol, to information stored in databases (e.g., databases 33, 34, and 35). Moreover, tools 38 and 39 may be coupled to another XML tool 41, which is disposed within the server 28 for running server component tools of the framework, e.g., UML, RDB, etc. XML is typically used for message exchanging in the proper format.

The XML component 40 is linked to two models within the repository 32. The first is a relational database ("RDB") model 43 and the second is a Unified Modeling Language ("UML") model 44. The UML model 44 is based upon a set of analysis and design notations, which are becoming a de-facto industry standard for Object Oriented Analysis and Design. Another exemplary model, SCM model 46, is also illustrated within the repository 32. The SCM model 46 is based upon Select Component Manager, which is a tool that manages components.

At development time, it can be appreciated from the above that any model can be accessed by any tool within the framework, including legacy integration tools allowing modification, update and management of the system. Note also that the Client and Server may be heterogeneous, that is they may be completely different or without interrelation or may be from different manufacturers.

One of the primary advantages of the present invention is the ability to allow applications to evolve in order to provide new or enhanced functionality. Hence, the method and system disclosed and claimed herein are derived from the basic principles involved in the process of evolution. Evolution occurs when something develops in a new direction. In an engineering environment, evolution takes place through a deliberate process of recovery, that is the discovery and abstraction of existing assets by reverse engineering. Once the assets are recovered, they can be developed into new applications by forward engineering. The process repeats itself, thereby forming a cycle that may be entered at any point.

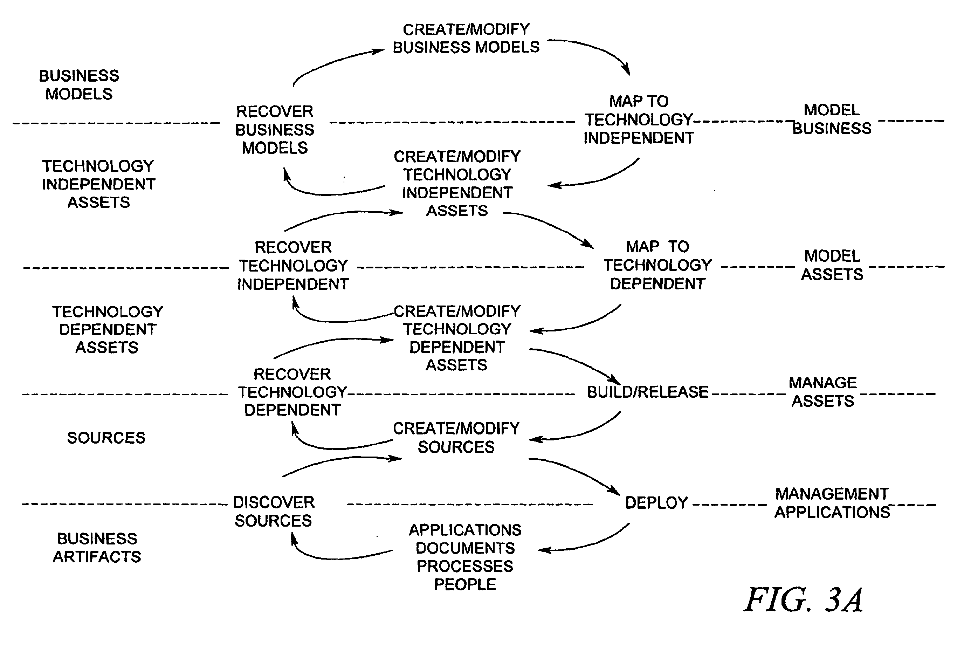

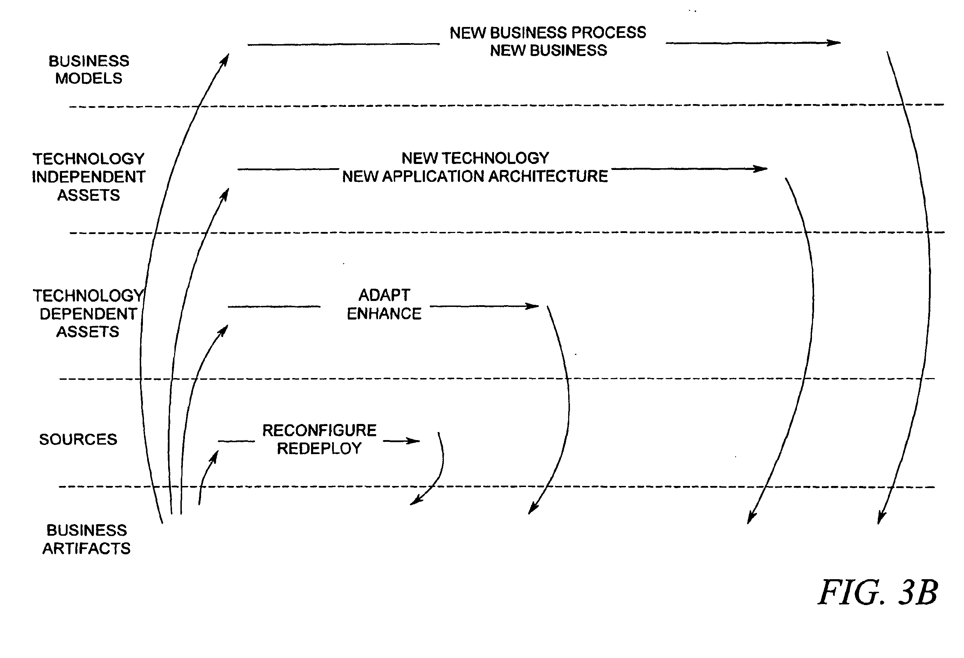

The concepts set forth above can be seen by reference to FIGS. 3A and 3B. The method and system of the present invention defines five layers: Business Models, Technology Independent Assets, Technology Dependent Assets, Applications and Business Artifacts. These layers are identified along the left hand side of both FIGS. 3A and 3B. To understand the scope of the term Business Model it is important to understand the term business domain. A business domain is defined as an entity in an organization that accomplishes specific tasks for proper working of the organization as a whole. Examples of business domains are sales department, human resource department, or the information technology department. A typical business domain generally comprises a wide range of functionalities, which in aggregation form the overall functions of a business domain. A clearly defined coherent description of such functionalities are called business models. They are the building blocks of an organization. Examples of Business Models can be the recruiting function of HR, the Intranet maintenance function of IT and the forecasting function of sales. A Business Model includes descriptions of people's roles, processes and procedures, and business rules.

A business asset is defined as a particular aspect of a business, such as workflow, rules, components, transaction, database, people, strategy, laws, etc. Depending on whether an asset is independent of or dependent upon technology, they are classified as Technology Dependent and Technology Independent assets. Examples of Technology Independent assets are people and strategy while that of Technology Dependent assets are databases and workflow.

A Business Artifact is defined as any of the things required to operate an enterprise, including programs, models, business rules, documentation, procedures and interactions. Artifacts are produced, for example, as part of the application development life cycle.

Since there are five layers, there are four boundaries (or stages) between them that represent the different stages of the application development process. Each of the four stages (shown on the right hand side of FIG. 3A) has its own set of Recover/Reconstruct, Create/Modify and Map/Specialize tools. At the lower levels, the reverse engineering process is primarily the discovery of applications, i.e., the locating and cataloging of existing business artifacts. At the middle layers, it is primarily recovery (both technology dependent and independent) - the abstraction of assets into less specialized models. At the higher layers, it is primarily reconstruction - the process of combining information about applications, processes and people into enterprise models.

An important concept is that, in general, the further an application needs to evolve, the further up into the layers the process needs to go. For example, simply reconfiguring or redeploying an application needs very little abstraction. More serious adaptation or enhancement of an application, but still using the same environment (same language, same operating system, same database, etc.), requires more abstraction into some form of technology-dependent modeling. Changing technologies or application architecture requires a further step of abstraction - the application must be made independent of the old technology before evolving into the new. Finally, re-engineering an entire business process requires abstracting all the way up to a model of the existing process before it can evolve.

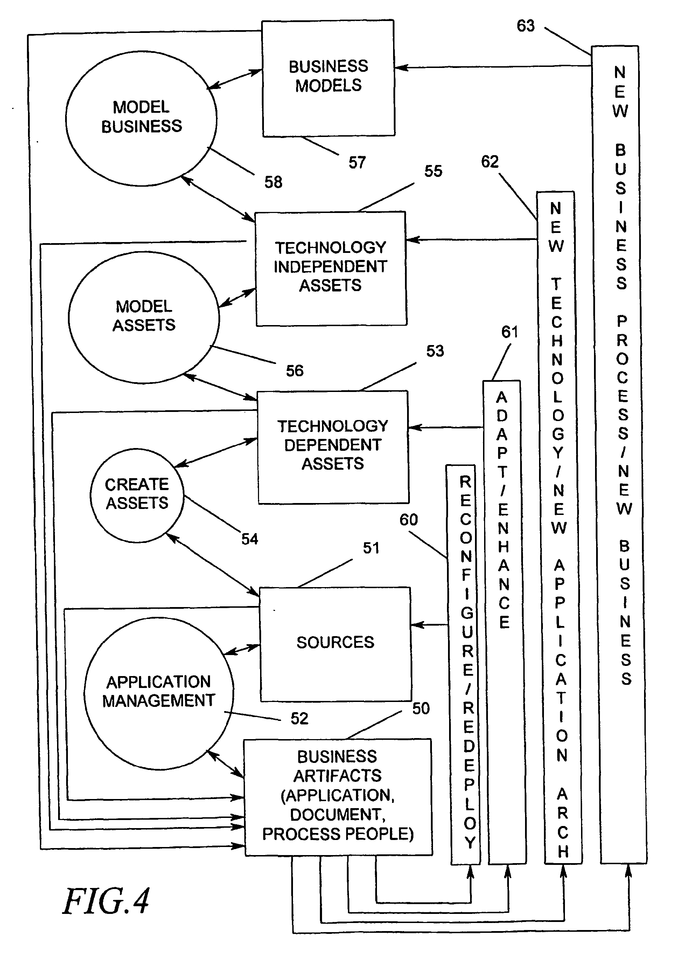

With reference to FIG. 4, the first of the five layers, Business Artifacts, is depicted by a block 50 and the second layer, Applications, is depicted by a block 51. The first of the four stages is Application Management, as depicted by a circle 52. The third layer, Technology Dependent Assets, is depicted by a block 53 and the second stage, Create Assets, is depicted by a circle 54. The fourth layer, Technology Independent Assets, is depicted by a block 55 and the third stage, Model Assets, is depicted by a circle 56. The fifth layer, Business Models, is depicted by a block 57 and the fourth stage, Model Business, is depicted by a circle 58.

Reconfiguring or redeploying an application needs very little abstraction, as alluded to earlier. This cycle of the process occurs within the Applications layer 51, the Application Management stage 52 and the Business Artifacts layer 50 by linking through a reconfigure/redeploy path (block 60). An adaptation or enhancement of an application, while still using the same environment, requires the use of the Technology Dependent Assets 53, the Create Assets stage 54 and those layers and stages below by linking through an Adapt/Enhance path (block 61). When the application must be made independent of the old technology before evolving into the new, requires the use of the Technology Independent Assets level 55, the Model Assets stage 56 and those layers and stages below, by linking through a New Technology/New Application Architecture path (block 62). For re-engineering an entire business process, the Business Models layer 57, the Model Business stage 58 and all the layers and stages below are required. This latter cycle is completed by linking through the New Business Process/New Business path (block 63).

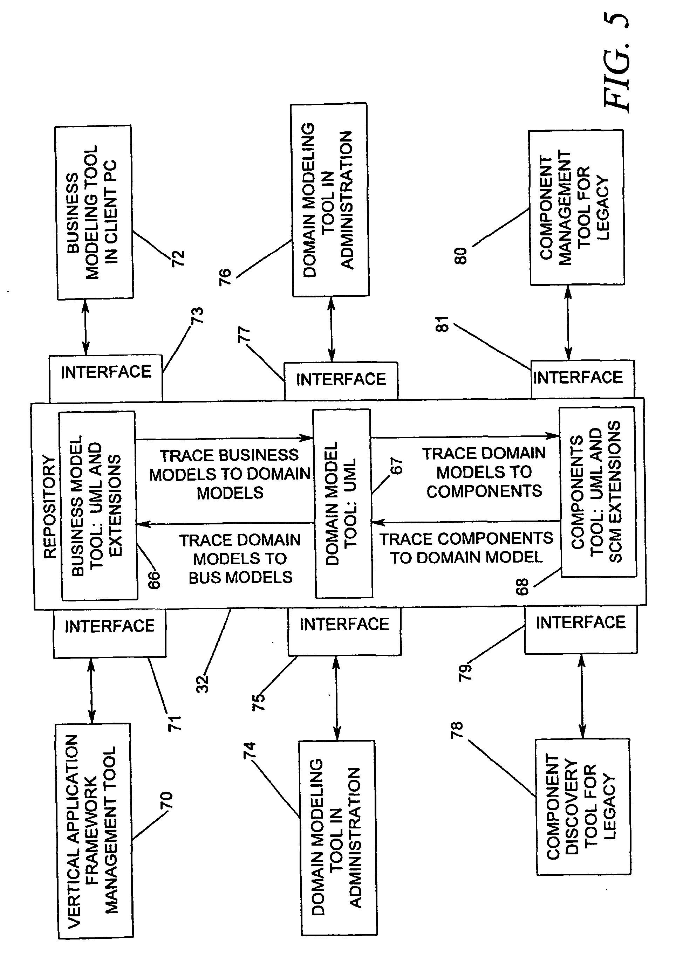

Referring now to FIG. 5, the interrelationships of the modules making up the development framework of the present invention are shown in a block diagram. Included within the repository 32 is a Business Model module 66. As noted, the module 66 may be written in UML with extensions, which will be amplified hereinafter. Also, there is shown a Domain Model module 67, which may also be written in UML. Finally, there is shown a Components module 68, also written in UML with SCM Extensions. Examples of the tools 36 through 39 (FIG. 2) are illustrated in FIG. 5 as follows. A Vertical Applications Framework Management Tool 70 is coupled to the repository 32 by means of an interface 71. The Vertical Application Framework Management Tool 70 may typically comprise tools such as the SAP R/3 application suite, which is available from SAP AG of Walldorf, Germany, or PeopleSoft HRMS packages available from PeopleSoft of Pleasanton, CA. A Business Modeling Tool in a Client PC 72 is coupled to the repository 32 by means of an interface 73. The Business Modeling Tool 72 may typically comprise a Select Enterprise, which is available from Select Software Tools, Ltd.

A Domain Modeling Tool in Administration 74 is coupled to the repository 32 by means of an interface 75. A second Domain Modeling Tool in Administration 76 is coupled to the repository 32 by means of an interface 77. The Domain Modeling Tools 74 and 76 may typically comprise any available database for which a domain model exists in the repository. A Component Discovery Tool for Legacy 78 is coupled to the repository 32 by means of an interface 79. A Component Discovery Tool, which may be useful for Legacy 78, is available from the assignee hereof. Legacy 78 is a software tool that discovers component descriptions for legacy applications and imports them into the repository 32. Finally, a Component Management Tool for Legacy 80 is coupled to the repository 32 by means of an interface 81. The Component Management Tool for Legacy 80 may typically comprise Select Component Manager, which is available from Select Software Tools, Ltd.

The interfaces 71, 73, 75, 77, 79 and 81 are typically an XML tool (see 40 and 41, FIG. 2) or a tool wrapper. A tool wrapper satisfactory for use with the present invention is a method and system that facilitates use of a software tool in heterogeneous environments and application categories in a software development framework, which has a storage device. First, a context object is created for storing all intermediate information generated while the tool is being used. Next, the specific environment in which the tool is going to be used is identified and information about the environment is stored in the context object. The specific tasks the tool typically performs are identified and searched for any previously accomplished tasks in the framework. The results of the search are stored in the context object. Information needed for the tool to operate is retrieved from the repository and the information is supplied as input files to the tool. The tool is run with the input files and the output derived is stored as a result of running the tool. The context object is updated by analyzing the output derived from the tool. Then, the analyzed output of the operation performed by the tool is stored in the repository for the environment.

A major advantage of the method and system of the present invention is the ability to link or trace from the Business Model 66 to the Domain Model 67, or to link or trace from the Domain Model 67 to the Components module 68. Also, this method and system can link or trace back from the Components module 68 to the Domain Model 67 or from the Domain Model 67 to the Business Model 66. In particular, the method of this invention provides traceability of the Business Models to the Domain Models, or traceability of the Domain Models to the Components. In a similar manner, the method provides traceability of the Components to the Domain Models or the Domain Models to the Business Models.

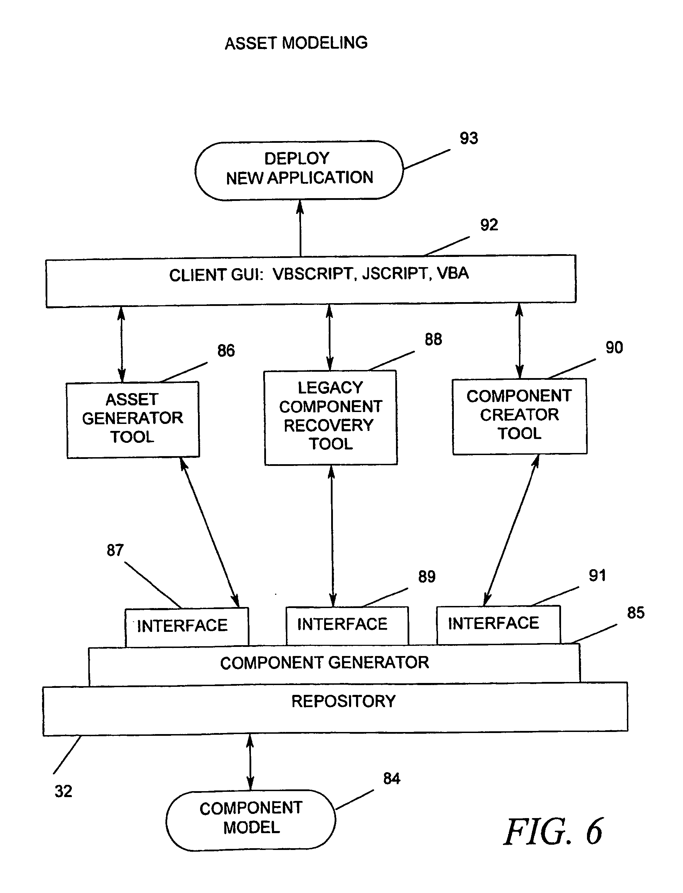

Referring now to FIG. 6, the asset modeling development framework of the present invention is shown. The repository 32 has coupled thereto a component model 84. A component generator 85 is also coupled to the repository 32, which is a "conductor" of the build process. A generator appropriate for the generator 85 is available from Unisys Corporation, assignee hereof. Essential, the generator 85 is a method and system that creates several components for detecting and correcting an out of date component. A component is considered out of date if one of its constituent files is newer than the components. At that point a build of the component is in order. A component dependent on another is considered out of date if the public interfaces to the component change. The interfaces of the dependent component do not necessarily have to be used by the component in question to affect the build situation. A component is considered up to date if all constituent files have a time stamp earlier than the component and no dependent components have changed their interfaces. Each of the components involved will act upon one of the situations to determine if a build should be done.

The generator 85 can effect updates to the Component Model 84. For example, the application under development may require certain additions or changes to the Model. Also, the generator 85 generates an interface to the various tools. An asset generator tool 86 is linked to the component generator 85 through an interface 87. The asset generator tool helps build new asset objects in the Component Model 84 through the repository 32. Next, a legacy component recovery tool 88 is linked to the component generator 85 by means of another interface 89. The recovery tool 88 contacts legacy components and links them to the Component Model 84. A component creator tool 90 is linked to the component generator 85 by means of an interface 91. The component creator tool 90 helps build new components and links them to the Component Model 84.

At this juncture, a user working at a client station through a GUI (i.e., Graphic User Interface) 92 actually develops a new application using the assets in the database and the models in the repository 32. After this, the new application is deployed as depicted by a bubble 93.

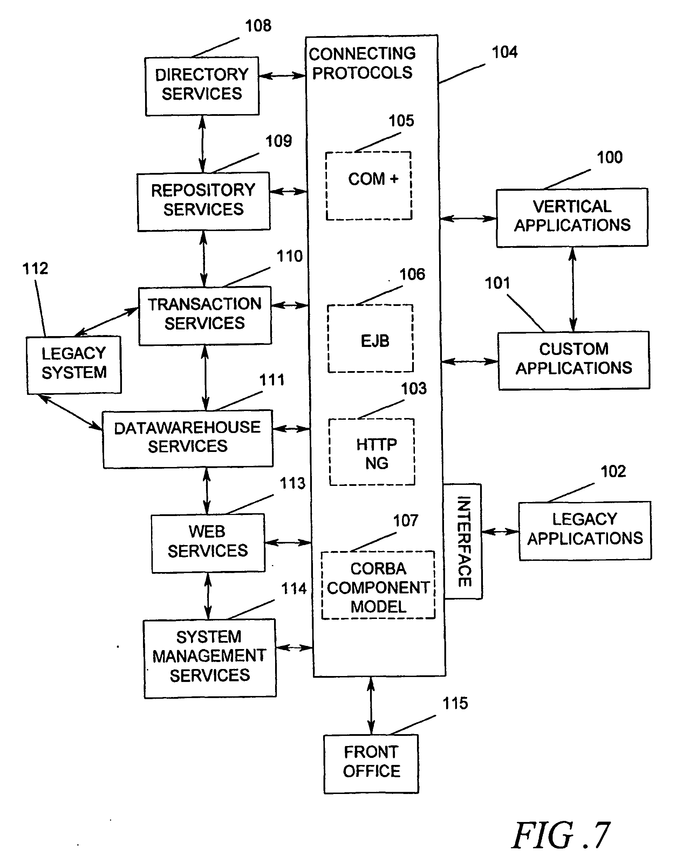

Referring now to FIG. 7, a block diagram of the execution-time architecture of the present invention is shown. At this juncture, the facts of an environment have been collected and used to build an application. Examples of such an application are vertical applications 100, custom applications 101 or legacy applications 102. Connecting Protocols 104 disposed between the Services and the Applications are used for exchanging messages between the applications (e.g., Vertical Applications 100, Custom Applications 101 and Legacy Applications 102). A first example of the Protocols 104 is COM+ 105, which is an evolution of the COM protocol from Microsoft Corporation of Redmond, WA. Another example is Enterprise Java Beans 106, which is available from Sun Microsystems of Mountain View, CA. Other similar connecting protocols may be employed in a like manner such as HTTP NG 103 or a CORBA Component Model 107.

Within the Server are a variety of services. First, there are Directory Services 108, which is an internal system service for file maintenance. A Directory Services product adequate for use as the Directory Services 108 is available from Unisys Corporation, assignee hereof. Essentially, the Directory Services 108 is a method for controlling and tracking client access to server software being executed by the system. The method includes initiating a first call from one or more clients to the server and instantiating a server component within a server application for each client call. The server components instantiate engine components, which log onto a storage device for assignment of session ID's. The session ID's are returned to the engine components and passed back to the server components and entered and attached to a shared persistent resource, thereafter breaking the link between each server component and each engine component. The session ID's are passed back to the respective client components for reference when a next call to the server is to be made and the link between each server component and each client component is broken. When a subsequent call is initiated from a client to the server, which includes a session ID, another server component is instantiated within the server application. The shared persistent resource is accessed and a request is made for the reference to the corresponding engine component, which provides access to the storage device and allows the server component to complete any work requested by the client. On completion of the work requested by each client, the link between the client and the server is broken.

Returning to the description of FIG. 7, there are included Repository Services 109. Examples of the latter are Name Service, Composite Object Service, Version Service, Metadata Service, etc. See the aforementioned patents and applications relating to the repository 32. Transaction Services 110 are used for any transaction over the framework and can use a transaction server like MTS of Microsoft Corporation. Data-warehouse Services 111 are used for storing data, which may be accessed by the method of the present invention. Note that a Legacy System 112 is linked to the Protocols 104 by means of the Transaction Services 110 or the Data-warehouse Services 111.

In addition to the above, Web Services 113 and System Management Services 114 are linked to the Protocols 104 for any services over the internet and can use Internet Information Server. Finally, a so-called Front Office 115 is linked to the Protocols 104 to handle user screens and tool manipulation.

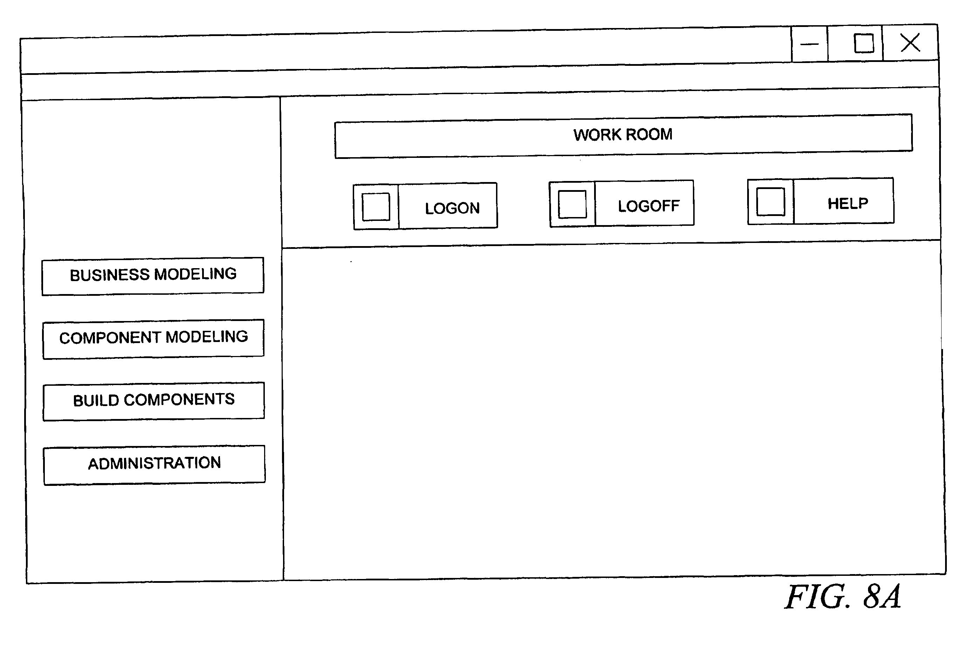

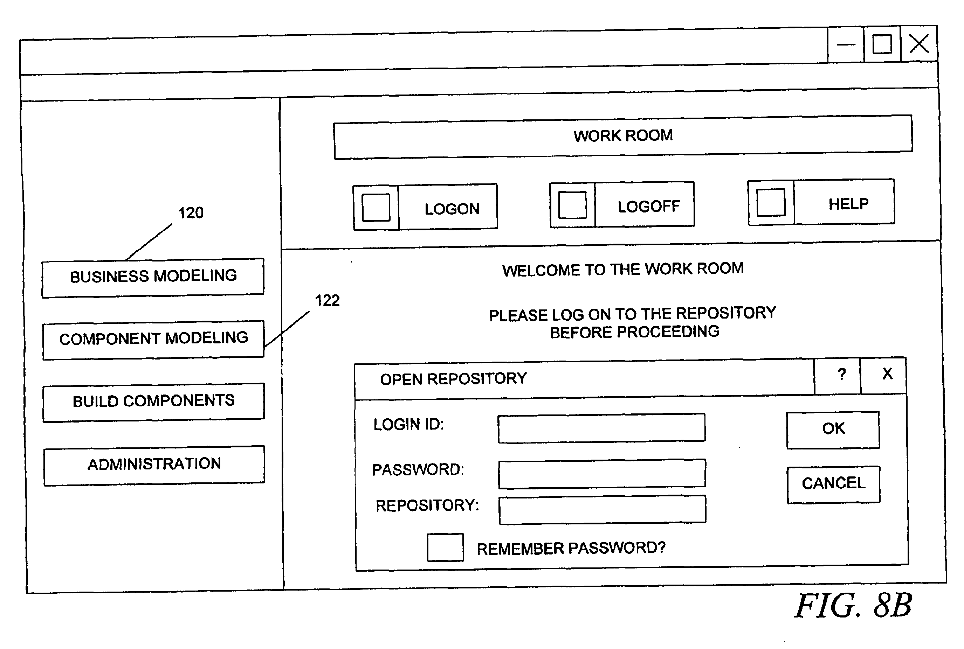

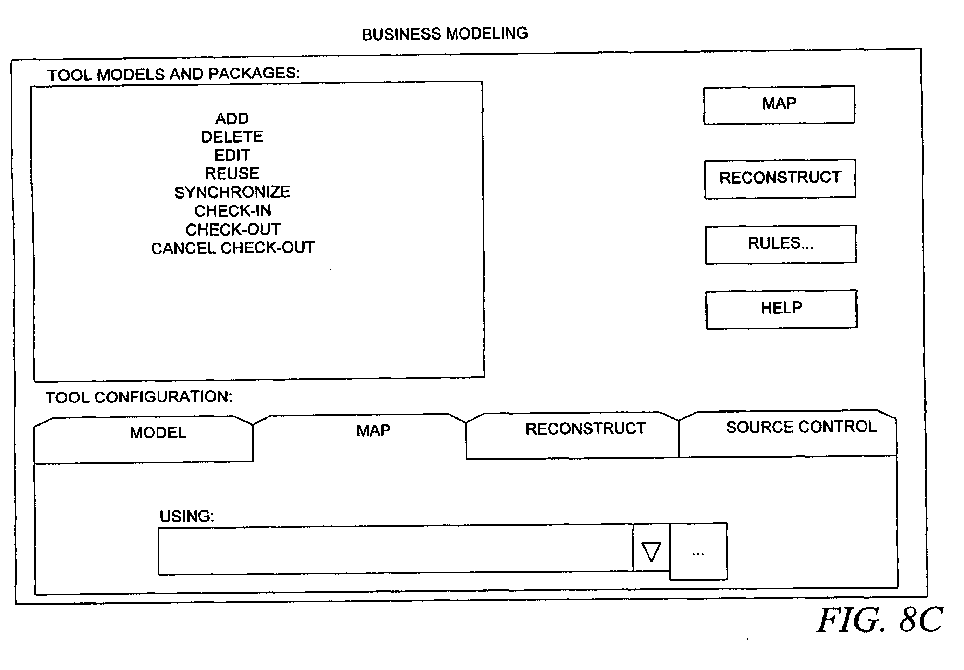

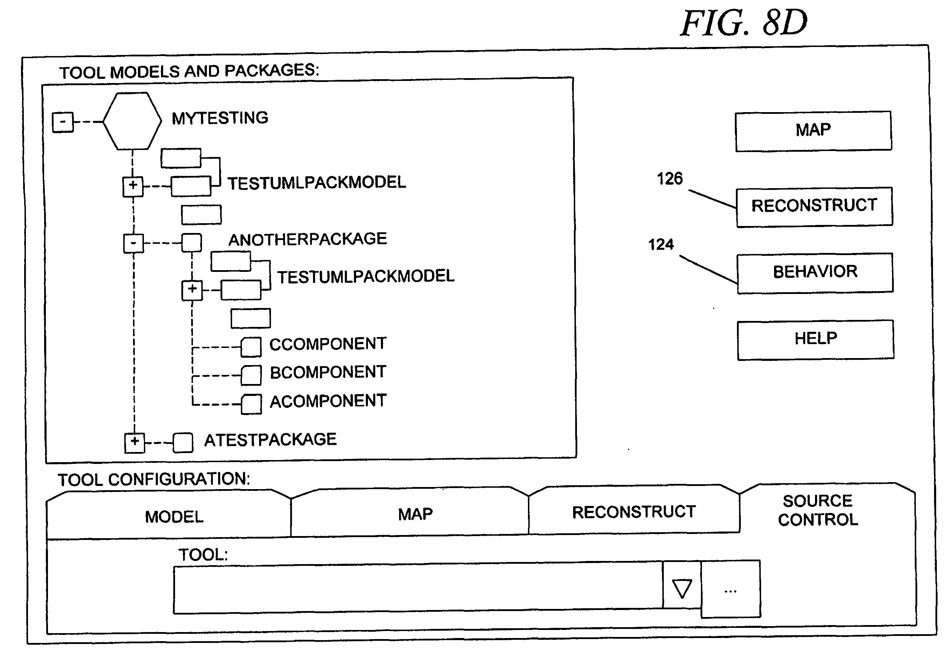

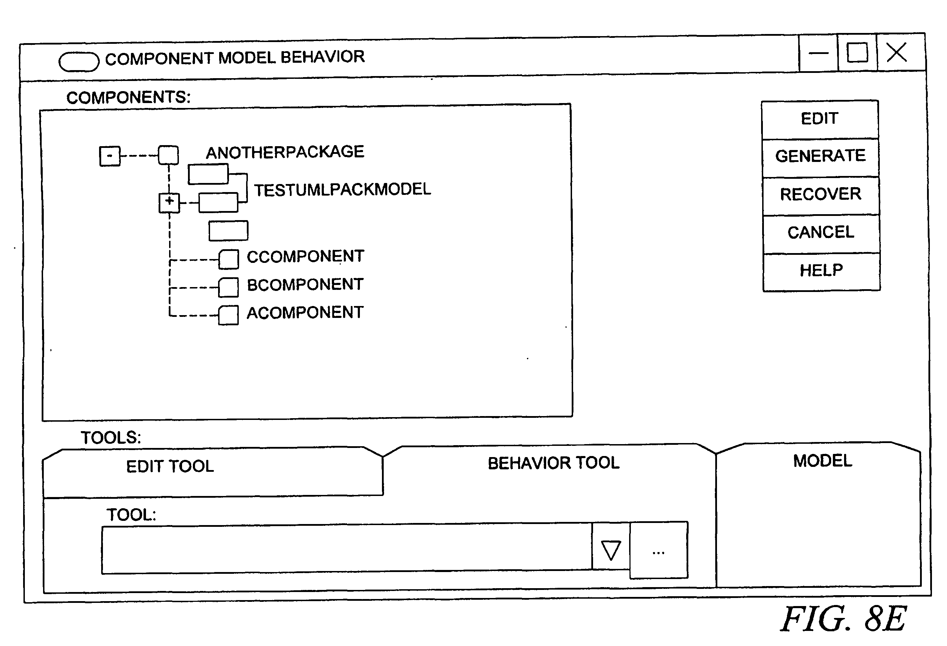

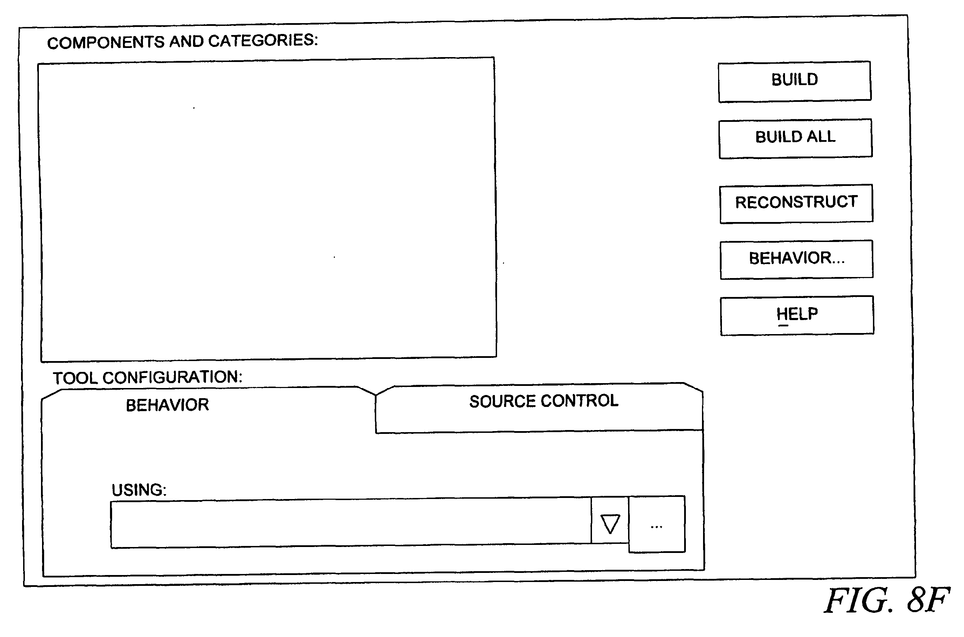

Referring now to FIGS. 8A through 8F, a series of top-level screens for the workroom, as viewed by a user, are shown for the tool time process. FIG. 8A illustrates the basic screen that appears after system initialization. FIG. 8B illustrates the Log On screen, wherein a user enters a LogIn ID and a Password to gain access to the framework and the repository. FIG. 8C illustrates the screen for business modeling, which appears if the user clicks on the Business Modeling button 120 (FIG. 8B). FIG. 8D illustrates the screen for components, which would appear if the user clicks on the Component Modeling button 122 (FIG. 8B). FIG. 8E illustrates the screen for Component Model Behavior, which would appear if a user clicks on the Behavior button 124 (FIG. 8D). FIG. 8F illustrates the build screen, which appear if a user clicks on the Reconstruct button 126 (FIG. 8D).

The methods and apparatus of the present invention, or certain aspects or portions thereof, may take the form of program code (i.e., instructions) embodied in tangible media, such as floppy diskettes, CD-ROMS, hard drives, or any other machine-readable storage medium, wherein, when the program code is loaded into and executed by a machine, such as a computer, the machine becomes an apparatus for practicing the invention. The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as a computer, the machine becomes an apparatus for practicing the invention. When implemented on a general-purpose processor, the program code combines with the processor to provide a unique apparatus that operates analogously to specific logic circuits.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of operating a computer system having a repository program (32) being executed therein, for integrating software development tools (36, 37, 38, 39) into said system by storing outputs of said tools (36, 37, 38, 39) in said repository (32) as models, said models including domain models and business models, a business model being a clearly defined coherent description of the functionalities in the business domain, said system being used for building, deploying and maintaining applications in a heterogeneous development framework (FIG. 5), said method including the steps of:
a. tracing the origin of a first newly developed business model to a first newly developed domain model (66 to 67) by analyzing components of both of said newly developed models and linking said models together in said repository (32);
b. tracing the constituent components of a second newly developed domain model to a newly developed set of components (67 to 68) created in a process of building and deploying new applications and linking both of them together in said repository (32) so as to break out parts of said first newly developed business model into individual components for further refinement;
c. recovering constituent components (68 to 67) of a program from an existing system in a first heterogeneous environment and reconstructing said constituent components into usable components inside a third newly developed domain model and linking said reconstructed constituent components and said third newly developed domain model together in said repository (32); and
d. recovering a fourth previously built domain model (67 to 66) from a second heterogeneous environment and linking it to a second newly developed business model in said repository (32) by mapping domain models into business models.

2. The method as in Claim 1 further comprising at execution time the step of operating a software development tool (74) for developing applications for a specific task in said framework through a second software development tool (76) used for developing applications for a second task through relationships between objects generated inside said repository (32).

3. The method as in Claim 1 further comprising the step of tracing origin of a first modified business model to a fourth newly developed domain model (66 to 67) and linking said modified business model to said fourth newly developed domain model in said repository (32).

4. The method as in Claim 1 further comprising the step of tracing origin of a third newly developed business model to a second existing domain model (66 to 67) and linking said third newly developed business model to said second existing domain model in said repository (32).

5. The method as in Claim 1 further comprising the step of tracing origin of a second modified business model to a third existing domain model (66 to 67) and linking said second modified business model to said third existing domain model in said repository (32).

6. A computer-readable medium on which a computer program is embodied, said computer program comprising code means adapted to perform all the steps of one or more of claims 1-5 when said program is run on a data processing machine (30).

7. An apparatus (FIG. 5) for integrating software development tools (36, 37, 38, 39) into a computer system having a repository program (32) being executed therein by storing outputs of said tools (36, 37, 38, 39) in said repository (32) as models, said models including domain models and business models, a business model being a clearly defined coherent description of the functionalities in the business domain, said system being used for building, deploying and maintaining applications in a heterogeneous development framework, said framework comprising:
a. a first module (66) disposed for representing business models derived from a business modeling tool,;
b. a second module (67) disposed for holding information assets;
c. means for tracing (66 to 67) origin of a first newly developed business model in said first module (66) to a first newly developed domain model in said second module (67) and linking said business model to said domain model in said repository (32) by analyzing components of both of said newly developed models;
d. a third module (68) containing a multiplicity of component interfaces useful in building applications;
e. means for tracing constituent components (67 to 68) of a second newly developed domain model in said third module to a newly developed set of components created in a process of building and deploying new applications and linking both of them together in said repository (32) so as to break out parts of said first newly developed business model into individual components for further refinement;
f. means for recovering constituent components (68 to 67) of a program from an existing system in a first heterogeneous environment and reconstructing said constituent components into usable components inside a third newly developed domain model and linking said reconstructed constituent components and said third newly developed domain model together in said repository (32); and
g. means for recovering a fourth previously built domain model from a second heterogeneous environment (67 to 66) and linking it to a second newly developed business model in said repository (32) by mapping domain models into business models.

## Patentansprüche

1. Ein Verfahren zum Betreiben eines Computersystems mit einem Repository-Programm (32), das darin ausgeführt wird, zum Integrieren von Software-Entwicklungstools (36, 37, 38, 39) in das System durch Speichern von Ausgaben der Tools (36, 37, 38, 39) in das Repository (32) als Modelle, wobei die Modelle Domänen-Modelle und Geschäfts-Modelle einschließen, wobei ein Geschäfts-Modell eine deutlich bestimmte kohärente Beschreibung der Funktionalitäten in der Geschäfts-Domäne ist, wobei das System für den Aufbau, den Einsatz und die Aufrechterhaltung von Anwendungen in einem heterogenen Entwicklungs-Rahmen (Fig. 5) verwendet wird, wobei das Verfahren die folgenden Schritte einschließt:
a. Verfolgung des Ursprungs von einem ersten neu entwickelten Geschäfts-Modell zu einem ersten neu entwickelten Domänen-Modell (66 bis 67), indem Komponenten von beiden der neu entwickelten Modelle analysiert und die Modelle zusammen in dem Repository (32) verknüpft werden;
b. Verfolgung der Bestandteil-Komponenten von einem zweiten neu entwickelten Domänen-Modell zu einem neu entwickelten Satz von Komponenten (67 bis 68), die in einem Prozess des Aufbaus und des Einsatzes neuer Anwendungen geschaffen wurden, und Verknüpfung von beiden von ihnen zusammen in dem Repository (32), damit Teile des ersten neu entwickelten Geschäfts-Modells in einzelne Komponenten für eine weitere Verfeinerung heraus gebrochen werden;
c. Wiederherstellung von Bestandteil-Komponenten (68 bis 67) eines Programms aus einem bestehenden System in einer ersten heterogenen Umgebung und Wiederaufbau der Bestandteil-Komponenten in verwendbare Komponenten innerhalb eines dritten neu entwickelten Domänen-Modells und Verknüpfung der wiederaufgebauten Bestandteil-Komponenten und des dritten neu entwickelten Domänen-Modells zusammen in dem Repository (32); und
d. Wiederherstellung eines vierten zuvor aufgebauten Domänen-Modells (67 bis 66) aus einer zweiten heterogenen Umgebung und Verknüpfung dessen mit einem zweiten neu entwickelten Geschäfts-Modell in dem Repository (32) durch das Abbilden von Domänen-Modellen in Geschäfts-Modelle.

2. Das Verfahren gemäß Anspruch 1, das zu der Zeit der Ausführung ferner den Schritt des Betreibens eines Software-Entwicklungstools (74) zum Entwickeln von Anwendungen für eine spezifische Aufgabe in dem Rahmen durch ein zweites Software-Entwicklungstool (76) umfasst, das zum Entwickeln von Anwendungen für eine zweite Aufgabe durch Beziehungen zwischen Objekten verwendet wird, die innerhalb des Repositorys (32) erzeugt wurden.

3. Das Verfahren gemäß Anspruch 1, das ferner den Schritt der Verfolgung des Ursprungs von einem ersten modifizierten Geschäfts-Modell zu einem vierten neu entwickelten Domänen-Modell (66 bis 67) und der Verknüpfung des modifizierten Geschäfts-Modells mit dem vierten neu entwickelten Domänen-Modell in dem Repository (32) umfasst.

4. Das Verfahren gemäß Anspruch 1, das ferner den Schritt der Verfolgung des Ursprungs von einem dritten neu entwickelten Geschäfts-Modell zu einem zweiten bestehenden Domänen-Modell (66 bis 67) und der Verknüpfung des dritten neu entwickelten Geschäfts-Modells mit dem zweiten bestehenden Domänen-Modell in dem Repository (32) umfasst.

5. Das Verfahren gemäß Anspruch 1, das ferner den Schritt der Verfolgung des Ursprungs von einem zweiten modifizierten Geschäfts-Modell zu einem dritten bestehenden Domänen-Modell (66 bis 67) und der Verknüpfung des zweiten modifizierten Geschäfts-Modells mit dem dritten bestehenden Domänen-Modell in dem Repository (32) umfasst.

6. Ein computerlesbares Medium, auf dem ein Computerprogramm verkörpert ist, wobei das Computerprogramm Code-Mittel umfasst, die derart ausgestaltet sind, um sämtliche der Schritte von einem oder mehreren der Ansprüche 1-5 auszuführen, wenn das Programm auf einer Datenverarbeitungsmaschine (30) betrieben wird.

7. Eine Vorrichtung (Fig. 5) zum Integrieren von Software-Entwicklungstools (36, 37, 38, 39) in ein Computersystem mit einem Repository-Programm (32), das darin ausgeführt wird, durch Speichern von Ausgaben der Tools (36, 37, 38, 39) in dem Repository (32) als Modelle, wobei die Modelle Domänen-Modelle und Geschäfts-Modelle einschließen, wobei ein Geschäfts-Modell eine deutlich bestimmte kohärente Beschreibung der Funktionalitäten in der Geschäfts-Domäne ist, wobei das System für den Aufbau, den Einsatz und die Aufrechterhaltung von Anwendungen in einem heterogenen Entwicklungs-Rahmen verwendet wird, wobei der Rahmen folgendes umfasst:
a. ein erstes Modul (66), das zum Darstellen von Geschäfts-Modellen angeordnet ist, die aus einem Geschäfts-Modellierungstool abgeleitet wurden;
b. ein zweites Modul (67), das zum Halten von Informationsbeständen angeordnet ist;
c. Mittel zum Verfolgen (66 bis 67) des Ursprungs von einem ersten neu entwickelten Geschäfts-Modell in dem ersten Modul (66) zu einem ersten neu entwickelten Domänen-Modell in dem zweiten Modul (67) und Verknüpfen des Geschäfts-Modells mit dem Domänen-Modell in dem Repository (32) durch die Analyse von Komponenten von beiden der neu entwickelten Modelle;
d. ein drittes Modul (68), das eine Vielzahl von Komponenten-Schnittstellen enthält, die bei dem Aufbau von Anwendungen nützlich sind;
e. Mittel zum Verfolgen von Bestandteil-Komponenten (67 bis 68) von einem zweiten neu entwickelten Domänen-Modell in dem dritten Modul zu einem neu entwickelten Satz von Komponenten, die in einem Prozess des Aufbaus und des Einsatzes neuer Anwendungen geschaffen wurden, und Verknüpfen von beiden von ihnen zusammen in dem Repository (32), damit Teile des ersten neu entwickelten Geschäfts-Modells in einzelne Komponenten für eine weitere Verfeinerung heraus gebrochen werden;
f. Mittel zum Wiederherstellen von Bestandteil-Komponenten (68 bis 67) eines Programms aus einem bestehenden System in einer ersten heterogenen Umgebung und Wiederaufbau der Bestandteil-Komponenten in verwendbare Komponenten innerhalb eines dritten neu entwickelten Domänen-Modells und Verknüpfen der wiederaufgebauten Bestandteil-Komponenten und des dritten neu entwickelten Domänen-Modells zusammen in dem Repository (32); und
g. Mittel zum Wiederherstellen eines vierten zuvor aufgebauten Domänen-Modells aus einer zweiten heterogenen Umgebung (67 bis 66) und Verknüpfen dessen mit einem zweiten neu entwickelten Geschäfts-Modell in dem Repository (32) durch das Abbilden von Domänen-Modellen in Geschäfts-Modelle.

## Revendications

1. Un procédé d'exploitation d'un système d'ordinateur, comprenant un programme d'entreposage d'objets (32) y étant exécuté, pour intégrer des outils de développement logiciel (36, 37, 38, 39) dans ledit système, par stockage de sorties desdits outils (36, 37, 38, 39) dans ledit entrepôt d'objets (32) en tant que modèles, lesdits modèles comprenant des modèles de domaine et des modèles d'activité commerciale, un modèle d'activité commerciale étant une description cohérente, définie clairement, des fonctionnalités dans le domaine commercial, ledit système étant utilisé pour construire, déployer et maintenir des applications dans un cadre de développement hétérogène (FIG. 5), ledit procédé comprenant les étapes consistant à :
a. tracer l'origine d'un premier modèle d'activité commerciale nouvellement développé, sur un premier modèle de domaine nouvellement développé (66 à 67), en analysant les composants des deux, parmi lesdits modèles nouvellement développés, et en reliant lesdits modèles ensemble dans ledit entrepôt d'objets (32) ;
b. tracer les composants constituants d'un deuxième modèle de domaine nouvellement développé en un jeu, nouvellement développé, de composants (67 à 68), créés en un processus de construction et de déploiement de nouvelles applications, et relier deux d'entre eux dans ledit entrepôt d'objets (32), pour fractionner des parties dudit premier modèle d'activité commerciale nouvellement développé en des composants individuels pour produire un raffinement supplémentaire ;
c. récupérer des composants constituants (68 à 67) d'un programme, depuis un système existant dans un premier système hétérogène, et reconstruire lesdits composants constituants en des composants utilisables à l'intérieur d'un troisième modèle de domaine nouvellement développé et relier ensemble lesdits composants constituants reconstruits et ledit troisième modèle de domaine nouvellement développé, dans ledit entrepôt d'objet (32) ; et
d. récupérer un quatrième modèle de domaine antérieurement construit (66 à 66), depuis un deuxième environnement hétérogène, et le relier à un deuxième modèle d'activité commerciale nouvellement développé dans ledit entrepôt d'objets (32), en mappant des modèles de domaine en des modèles d'activité commerciale.

2. Le procédé selon la revendication 1, comprenant en outre, au moment de l'exécution, l'étape d'exploitation d'un outil de développement logiciel (74), pour développer des applications pour une tâche spécifique dans ledit cadre, par un deuxième outil de développement logiciel (76), utilisé pour développer des applications pour une deuxième tâche par des relations entre des objets ayant été générés dans ledit entrepôt d'objets (32).

3. Le procédé selon la revendication 1, comprenant en outre l'étape de traçage de l'origine d'un premier modèle d'activité commerciale modifié sur un quatrième modèle de domaine nouvellement développé (66 à 67), et de liaison dudit modèle d'activité commerciale modifié audit quatrième modèle de domaine nouvellement développé dans ledit entrepôt d'objets (32).

4. Le procédé selon la revendication 1, comprenant en outre l'étape de traçage de l'origine d'un troisième modèle activité commerciale nouvellement développé sur un deuxième modèle de domaine existant (66 à 67) et de liaison dudit troisième modèle d'activité commerciale nouvellement développé audit deuxième modèle de domaine existant dans ledit entrepôt d'objets (32).

5. Le procédé selon la revendication 1, comprenant en outre l'étape de traçage de l'origine d'un deuxième modèle d'activité commerciale modifié en un troisième modèle de domaine existant (66 à 67), et de liaison dudit deuxième modèle d'activité commerciale modifié audit troisième modèle de domaine existant, dans ledit entrepôt d'objets (32).

6. Un support lisible par ordinateur, sur lequel un programme d'ordinateur est mis en oeuvre, ledit programme d'ordinateur comprenant des moyens de codes, adaptés pour accomplir la totalité des étapes d'une ou plusieurs des revendications 1 à 5, lorsque ledit programme fonctionne sur une machine de traitement de données (30).

7. Un dispositif (FIG. 5) pour intégrer des outils de développement logiciel (36, 37, 38, 39) dans un système d'ordinateur comprenant un programme d'entrepôt d'objets (32) y étant exécuté, par stockage de sorties desdits outils (36, 37, 38, 39) dans ledit entrepôt d'objets (32) en tant que modèles, lesdits modèles incluant des modèles de domaine et des modèles d'activité commerciale, un modèle d'activité commerciale étant une description cohérente, clairement définie, des fonctionnalités dans le domaine d'activité commerciale, ledit système étant utilisé pour construire, déployer et maintenir des applications dans un cadre de développement hétérogène, ledit cadre comprenant :
a. un premier module (66) disposé pour représenter des modèles d'activité commerciale dérivés d'un outil de modélisation d'activité commerciale ;
b. un deuxième module (67) disposé pour détenir des éléments d'information ;
c. des moyens, pour tracer (66 à 67) l'origine d'un premier modèle d'activité commerciale nouvellement développé dans ledit premier module (66) sur un premier modèle de domaine nouvellement développé dans ledit deuxième module (67), et de liaison dudit modèle d'activité commercial audit modèle de domaine dans ledit entrepôt d'objet (32), en analysant des composants desdits deux modèles nouvellement développés ;
d. un troisième module (68), contenant une pluralité d'interfaces de composant, utiles pour construire des applications ;
e. des moyens, pour tracer des composants constituants (67 à 68) d'un deuxième modèle de domaine nouvellement développé dans ledit troisième module, à un jeu nouvellement développé de composants, créés dans un processus de construction et de déploiement de nouvelles applications et de liaison ensemble de deux d'entre eux dans ledit entrepôt d'objets (32), pour fractionner des parties dudit premier modèle d'activité commerciale nouvellement développé en des composants individuels, pour produire un raffinement supplémentaire ;
f. des moyens, de récupération des composants constituants (68 à 67) d'un programme depuis un système existant, dans un premier environnement hétérogène, et de reconstruction desdits composants constituants en des composants utilisables à l'intérieur d'un troisième modèle de domaine nouvellement développé, et de liaison desdits composants constituants reconstitués et dudit troisième modèle de domaine nouvellement développé ensemble, dans ledit entrepôt d'objet (32) ; et
g. des moyens, de récupération d'un quatrième modèle de domaine antérieurement construit, depuis un deuxième environnement hétérogène (67 à 66), et de liaison de celui-ci à un deuxième modèle d'activité commerciale nouvellement développé, dans ledit entrepôt d'objets (32), en mappant des modèles de domaine en des modèles d'activité commerciale.
